# EUROPÄISCHE PATENTSCHRIFT

(11) **EP 2 565 350 B1**
(45) Veröffentlichungstag und Bekanntmachung des Hinweises auf die Patenterteilung: **03.12.2014**
(21) Anmeldenummer: 11179530.8
(22) Anmeldetag: 31.08.2011
(51) Int. Cl.: B62B 5/04, E04H 12/22, F16M 11/42

(54) **Mobiler Ständer**
Mobile stand
Support mobile

(43) Veröffentlichungstag der Anmeldung: 06.03.2013
(73) Patentinhaber: Nerger, Jürgen, 47506 Neukirchen-Vluyn (DE); Teske, Heiko, 47506 Neukirchen-Vluyn (DE)
(72) Erfinder: Nerger, Jürgen, 47506 Neukirchen-Vluyn (DE); Teske, Heiko, 47506 Neukirchen-Vluyn (DE)
(74) Vertreter: Cohausz & Florack

(56) Entgegenhaltungen:
- EP-A1- 1 243 722
- EP-A1- 1 571 277
- EP-A2- 1 870 540
- CH-A5- 682 975
- DE-U1- 20 015 358

## Beschreibung

Der Gegenstand betrifft einen mobilen Ständer, insbesondere einen mobilen Schirmständer mit einem Rollenträger, einem Mast, einem fest an dem Mast angeordneten Standfuß, und einer an einem zum Standfuß ortsfesten Schwenkpunkt schwenkbar angelenkten Hebeeinrichtung. Vorzugsweise ist die Hebeeinrichtung so am Schwenkpunkt angelenkt, dass eine Schwenkbewegung der Hebeeinrichtung um den Schwenkpunkt den Standfuß relativ zum Rollenträger in einer Vertikalbewegung absenkt und/oder anhebt.

Ein mobiler Schirmständer ist beispielsweise aus der EP 1 571 277 A1 bekannt. Der darin beschriebene Schirmständer zeichnet sich dadurch aus, dass mittels einer an der Hebeeinrichtung angeordneten Schubstange eine Relativbewegung zwischen dem Standfuß und dem Rollenträger bewirkt werden kann. Durch die Relativbewegung wird der Abstand zwischen Rollenträger und Standfuß verändert, so dass der Standfuß auf den Boden abgesenkt oder vom Boden angehoben werden kann.

Bei dem eingangs genannten Schirmständer ist der Standfuß regelmäßig mit Gewichten von bis zu 150kg beschwert. Dieses Gewicht wirkt auf den Standfuß, die Hebeeinrichtung und den Rollenträger. Insbesondere beim Anheben des Rollenträgers, was zu einem Absenken des Standfußes führt, treten sehr hohe Drehmomente an der Hebeeinrichtung auf. Diese führen dazu, dass die Schubstange in Richtung des Mastes beschleunigt wird und Quetschungen am Mast nicht sicher vermieden werden können.

Aus diesem Grunde lag dem Gegenstand die Aufgabe zugrunde, einen mobilen Ständer zur Verfügung zu stellen, der zum Einen eine hohe Standfestigkeit aufgrund seines hohen Gewichtes hat und zum Anderen die Bedienersicherheit erhöht.

Diese Aufgabe wird durch einen mobilen Ständer nach Anspruch 1 gelöst.

Es ist erkannt worden, dass die auf den Standfuß wirkende Gewichtskraft über den Schwenkpunkt in die Hebeeinrichtung eingeleitet wird. Sobald sich zwischen dem Schwenkpunkt und einem Auflagepunkt der Hebeeinrichtung am Rollenträger ein Hebelarm einstellt, übt die auf den Schwenkpunkt wirkende Gewichtskraft des Standfußes ein großes Drehmoment auf die Hebeeinrichtung aus. Gerade beim Absenken und Anheben des Standfußes wirkt auf die Hebeeinrichtung ein großes Drehmoment, welches durch den Benutzer häufig nicht mehr zu handhaben ist, insbesondere solang die Gewichtskraft des Standfußes noch über die Rollen aufgenommen wird und der Standfuß noch nicht am Boden aufliegt. Sobald der Standfuß am Boden aufliegt, wird die Gewichtskraft des Standfußes durch den Standfuß selbst getragen.

In diesem Zusammenhang sei angemerkt, dass der Rollenträger gemäß einem bevorzugtem Ausführungsbeispiel stets Bodenkontakt hat, unabhängig davon, ob der Standfuß abgesenkt, angehoben oder sich in einem Zwischenstadium der Anhebung befindet.

Der Standfuß kann mit einer Gewichtsaufnahmeeinrichtung (Platte, Winkelbleche, Profile, etc.) versehen sein, über die Gewichte auf dem Standfuß platziert werden können. Die Rollen des Rollenträgers nehmen die Last des Rollenträgers und des Standfuß auf, solange bis der Standfuß selbst am Boden steht.

Um zu gewährleisten, dass die Hebeeinrichtung auch bei hohen Gewichten des Standfußes stets leicht bedienbar ist, wird nun vorgeschlagen, dass eine Kraftunterstützungseinrichtung an dem Ständer vorgesehen ist. Die Kraftunterstützungseinrichtung ist derart angeordnet, dass sie das vom Standfuß bei der Schwenkbewegung, vorzugsweise beim Anheben und/oder Absenken des Standfuß relativ zum Rollenträger, über den Schwenkpunkt auf die Hebeeinrichtung ausgeübte Drehmoment kompensiert. Hierzu kann eine Kraft unmittelbar auf die Hebeeinrichtung wirken, die so in die Hebeeinrichtung eingeleitet wird, dass auf die Hebeeinrichtung ein Drehmoment wirkt, welches entgegengesetzt zu dem durch den Standfuß in die Hebeeinrichtung eingeleiteten Drehmoment ist. Auch kann die Kraftunterstützungseinrichtung derart zwischen dem Standfuß und dem Rollenträger wirken, dass die Gewichtskraft des Standfußes teilweise kompensiert wird, so dass nur noch eine geringere Kraft auf den Schwenkpunkt wirkt und somit dass durch den Standfuß auf die Hebeeinrichtung ausgeübte Drehmoment zumindest teilweise kompensiert ist.

Der Standfuß ist vorzugsweise aus einer Platte zur Aufnahme von Gewichtselementen gebildet. Die Gewichtselemente dienen der Beschwerung des Ständers, so dass sich eine Vielzahl unterschiedlicher Anwendungsmöglichkeiten ergibt. Der Standfuß kann auch aus einer Konstruktion aus Winkelblechen und/oder Profilen gebildet sein.

Ein mobiler Ständer kann beispielsweise ein Ständer für jegliche Art von Schirm, wie Sonnenschirm, Regenschirm, Marktschirm oder dergleichen sein. Der Ständer kann auch als Wäscheständer bzw. Wäschespinneständer, Produkt- oder Verkaufsständer, insbesondere Postkarten- und Bekleidungsständer oder als Ständer für Hinweis-, Verkehrs- oder Signalschilder, insbesondere für Baken von Straßenbegrenzungen und -absperrungen dienen. Er kann auch als Sportgeräteständer, beispielsweise für ein Basketballkorb oder ein Volleyballnetz verwendet werden. Auch Bauzäune, beispielsweise aus Metall, können in Verbindung mit diesem Ständer aufgestellt werden. Auch kann der Ständer für Photovoltaikanlagen, insbesondere für die Aufnahme von Solarpanels gebildet sein. Weiterhin ist es denkbar, den Ständer als Ständer für Partytische bzw. Stehtische oder dergleichen zu verwenden. Auch Blumenkübel oder Heizstrahler können auf dem Ständer abgestellt werden. Bei Blumenkübelen sollte der Mast vorzugsweise unterhalb des Rollenträgers verbleiben, so dass der Rollenträger eine ebene Auflagefläche für den Blumenkübel bildet.

Es wird vorgeschlagen, dass die Kraftunterstützungseinrichtung zumindest eine am Rollenträger angeordnete Feder, insbesondere eine zwischen Hebeeinrichtung und Rollenträger, Mast oder Standfuß angeordnete Feder ist. Mittels dieser Kraftunterstützungseinrichtung kann ein Drehmoment auf die Hebeeinrichtung ausgeübt werden. Insbesondere wenn die Kraftunterstützungseinrichtung in einem Abstand vom Schwenkpunkt an der Hebeeinrichtung angeordnet ist, übt sie ein Drehmoment auf die Hebeeinrichtung aus.

Auch ist es möglich, dass zwischen Standfuß oder Mast und Rollenträger eine Feder angeordnet ist. In diesem Fall kann die Kraftunterstützungseinrichtung so angeordnet sein, dass sie der Gewichtskraft des Standfußes entgegenwirkt und diese unmittelbar auf den Rollenträger überträgt. Auch dies führt dazu, dass die vom Standfuß auf den Schwenkpunkt ausgeübte Kraft verringert ist, was dazu führt, dass das Drehmoment an der Hebeeinrichtung reduziert ist.

Eine Feder kann beispielsweise eine Schraubfeder, eine Biegefeder, eine Torsionsfeder, eine Luftfeder, eine Gasdruckfeder oder eine Elastomerfeder sein. Jegliche anderen Federelemente oder Dämpfungseinrichtungen, die eine Kraft entweder auf den Standfuß oder die Hebeeinrichtung ausüben können, sind Federn im Sinne des Gegenstands.

Um die Hebeeinrichtung sicherer um den Schwenkpunkt schwenken zu können, wird vorgeschlagen, dass der Schwenkpunkt am Mast oder Standfuß angeordnet ist. In diesem Fall kann die Hebeeinrichtung entweder am Mast oder am Standfuß angelenkt sein und um den jeweiligen Schwenkpunkt geschwenkt werden. Insbesondere eine Drehbewegung ist eine Schwenkbewegung im Sinne des Gegenstandes. In diesem Fall kann der Schwenkpunkt ein Drehpunkt sein.

Ist der Schwenkpunkt unmittelbar am Mast angeordnet, ist bevorzugt, dass der Schwenkpunkt durch einen den Mast entlang seines Durchmessers radial nach außen durchbrechenden Stift oder Dorn oder durch radial nach außen weisende Fortsätze, Vorsprünge oder Nasen gebildet ist. Diese Stifte, Dorne Fortsätze, Vorsprünge oder Nasen können auf beiden Seiten des Mastes in hierfür vorgesehene Aufnahmen der Hebeeinrichtung eingreifen und über die Aufnahmen die über den Mast auf den Schwenkpunkt wirkende Gewichtskraft des Standfußes aufnehmen. Die vom Standfuß über den Mast und den Schwenkpunkt auf die Hebeeinrichtung eingeleitete Gewichtskraft des Standfußes wird durch die Hebeeinrichtung auf den Rollenträger übertragen.

Auch ist es möglich, dass der Schwenkpunkt am Standfuß angeordnet ist. In diesem Fall kann die Hebeeinrichtung am Standfuß angelenkt sein, insbesondere über ein Drehgelenk. Die Gewichtskraft wirkt unmittelbar vom Standfuß auf die Hebeeinrichtung. Die Hebeeinrichtung hat vorzugsweise ein am Rollenträger angeordnetes Gegenlager, um die Gewichtskraft des Standfußes auf den Rollenträger zu übertragen.

Wie bereits erwähnt, muss die auf die Hebeeinrichtung wirkende Gewichtskraft des Standfußes - bei angehobenem Standfuß, insbesondere solang der Standfuß nicht auf dem Boden aufliegt und sein Gewicht selbst trägt - auf den Rollenträger übertragen werden. Um dies zu gewährleisten, wird vorgeschlagen, dass die Hebeeinrichtung eine um den Schwenkpunkt gelagerte, am Rollenträger anliegende Auflage aufweist. Die Auflage kann auf einer Auflagefläche am Rollenträger anliegen. Die Auflage liegt vorzugsweise auf der nach oben weisenden Oberfläche des Rollenträgers auf und erlaubt somit, eine Gewichtskraft auf den Rollenträger zu übertragen. Vorzugsweise ist die Auflage ein drehbares Lager, so dass die Hebeeinrichtung möglichst leichtgängig um den Schwenkpunkt geschwenkt werden kann, während die Auflage entlang der Auflagefläche am Rollenträger bewegt wird.

Um den mobilen Ständer zu bewegen, wird der Standfuß relativ zum Rollenträger angehoben, solange, bis der Standfuß keinen Bodenkontakt hat und die Rollen des Rollenträgers den Ständer tragen. Dabei erreicht der Standfuß seine erste Endposition relativ zum Rollenträger. Dies erfolgt bevorzugt in einer einzigen Schwenkbewegung der Hebeeinrichtung. Sobald der mobile Ständer an seine Zielposition versetzt wurde, wird durch die Hebeeinrichtung der Standfuß relativ zum Rollenträger abgesenkt, so dass sich der Standfuß in Richtung Boden bewegt und in seiner zweiten Endposition relativ zum Rollenträger auf den Boden aufliegt. Hierbei können die Rollen einerseits weiterhin am Boden anliegen, oder auch frei in der Luft hängen.

Bei dieser Relativbewegung wird die Hebeeinrichtung um den Schwenkpunkt geschwenkt. Hierbei wird vorgeschlagen, dass die Auflage der Hebeeinrichtung bei angehobenem Standfuß in einem ersten Winkel in einer ersten Richtung zum Lot des Schwenkpunktes an dem Rollenträger anliegt und dass die Auflage der Hebeeinrichtung bei abgesenktem Standfuß in einem zweiten Winkel in einer der ersten Richtung entgegengesetzten zweiten Richtung zum Lot des Schwenkpunktes an dem Rollenträger anliegt.

In dem ersten Winkel ist die Hebeeinrichtung vorzugsweise fixiert, so dass die Hebeeinrichtung nicht weiter um den Schwenkpunkt geschwenkt werden kann. Dies ist bevorzugt die erste Endposition des Standfußes. Ein Verschwenken der Hebeeinrichtung über diesen Winkel hinaus wird bevorzugt dadurch verhindert, dass die Hebeeinrichtung entlang einer Kante am Rollenträger aufliegt. In dieser ersten Endposition des Standfußes wird über die Auflage die Gewichtskraft des Standfußes auf den Rollenträger umgeleitet.

Wird die Hebeeinrichtung nun um den Schwenkpunkt geschwenkt, so dass die Auflage der Hebeeinrichtung von dem ersten Winkel über das Lot des Schwenkpunktes hinaus in Richtung des zweiten Winkels verschwenkt wird, so wirkt, nachdem die Auflage den Lotpunkt überschritten hat, die Gewichtskraft unmittelbar auf die Hebeeinrichtung, ohne dass die Hebeeinrichtung in einer Endposition fixiert ist. Diese Endposition ist erst erreicht, wenn der Standfuß am Boden aufliegt und der Rollenträger zumindest von der Gewichtskraft des Standfußes entlastet wurde, möglicherweise jedoch auch angehoben wurde.

Ausgehend von dem Lotpunkt bis zum zweiten Winkel kann die auf dem Schwenkpunkt wirkende Gewichtskraft des Standfußes ein Drehmoment in die Hebeeinrichtung einbringen. Dieses Drehmoment treibt die Hebeeinrichtung in Richtung der Endposition. Um zu verhindern, dass die Hebeeinrichtung bis zur Erreichung des Endpunkts der Schwenkbewegung ungebremst beschleunigt wird, muss in die Hebeeinrichtung ein Gegendrehmoment eingebracht werden. Ist das Gegendrehmoment viel kleiner als das Drehmoment, kann die Hebeeinrichtung und die damit verbundene Schubstange unkontrolliert beschleunigt werden und die Schubstange gegebenenfalls einem Benutzer aus der Hand geschlagen werden. Um diesem Drehmoment entgegenzuwirken, welches solange auf die Hebeeinrichtung einwirkt, bis diese an einem Endpunkt gelagert ist, wird die Kraftunterstützungseinrichtung eingesetzt. Diese führt dazu, dass das Drehmoment, welches zwischen Schwenkpunkt und Auflage der Hebeeinrichtung wirkt, zumindest teilweise kompensiert wird.

Gemäß einem vorteilhaften Ausführungsbeispiel wird vorgeschlagen, dass sich die Auflage beim Absenken des Standfußes über ein Punkt, welcher im Lot zum Schwenkpunkt liegt, hinaus entlang des Rollenträgers bewegt. Wie zuvor bereits erläutert, kann die Hebeeinrichtung so gestaltet sein, dass diese, wenn die Auflage in einem ersten Winkel zum Lot des Schwenkpunktes ist, in einer Endposition gehalten ist. Wird die Hebeeinrichtung dann über den Lotpunkt hinaus um den Schwenkpunkt in die andere Richtung verschwenkt, so wirkt ein Drehmoment zwischen Auflage und Schwenkpunkt solange, bis die Hebeeinrichtung in der zweiten Endposition gehalten ist. Die zweite Endposition ist regelmäßig dann erreicht, wenn die Hebeeinrichtung soweit um den Schwenkpunkt geschwenkt ist, dass der Rollenträger im Wesentlichen von der Gewichtskraft des Standfußes entlastet ist, in dem der Standfuß auf dem Boden aufsteht. Beim Überschreiten dieses Winkelabschnitts zwischen Lotpunkt und zweitem Winkel muss das auf die Hebeeinrichtung vom Standfuß wirkende Drehmoment zumindest teilweise kompensiert werden, wozu die Kraftunterstützungseinrichtung vorgeschlagen ist.

Vorzugsweise ist die Hebeeinrichtung um den Schwenkpunkt zwischen zwei Schwenkpositionen bewegbar, wobei eine erste Schwenkposition eine solche Position ist, bei der der Standfuß vollständig vom Boden abgehoben ist und die Rollen des Rollenträgers auf dem Boden aufliegen und eine zweite Schwenkposition eine solche Position ist, bei der der Standfuß am Boden aufliegt. Hierbei können die Rollen des Rollenträgers auf dem Boden, im Wesentlichen frei von der Gewichtskraft des Standfußes, aufliegen oder auch vollständig frei vom Boden abgehoben sein. Es wird vorgeschlagen, dass die Hebeeinrichtung zwischen der ersten Schwenkposition und der zweiten Schwenkposition schwenk oder drehbar gelagert ist. In der ersten Schwenkposition ist der Standfuß regelmäßig in einem ersten Abstand von dem Rollenträger. Bei diesem Abstand ist der Standfuß angehoben und die Rollen des Rollenträgers sind im Kontakt mit dem Boden und nehmen die Gewichtskraft des Standfußes auf. In einer zweiten Schwenkposition der Hebeeinrichtung haben Standfuß und Rollenträger einen zweiten Abstand. Dieser ist regelmäßig größer als der erste Abstand. Sind Standfuß und Rollenträger in einem größeren Abstand voneinander, so ist der Standfuß abgesenkt und in Kontakt mit dem Boden. Der Standfuß trägt sich dann selbst. Die Rollen des Rollenträgers können auch soweit angehoben sein, dass sie den Boden nicht mehr berühren.
In der ersten Schwenkposition lässt sich der Ständer verschieben, indem eine Schubstange eine Kraft auf die Hebeeinrichtung ausübt und diese dann eine Bewegung des Ständers mittels der Rollen ermöglicht. In der zweiten Schwenkposition liegt der Standfuß auf dem Boden auf und aufgrund des hohen Gewichts des Standfußes lässt sich dieser nicht mehr mit der Schubstange oder der Hebeeinrichtung verschieben.

Wie bereits erläutert, ist der zweite Abstand der Abstand, bei dem der Standfuß auf dem Boden aufliegt. Um dies zu gewährleisten, muss der zweite Abstand so groß sein, dass eine an dem Rollenträger angeordnete Rolle vollständig zwischen Rollenträger und einer Unterseite des Standfußes angeordnet ist. Die Unterseite des Standfußes ist vorzugsweise die untere Ebene des Standfußes bzw. die Auflageflächen des Standfußes.

Um das Drehmoment, welches von dem Standfuß auf die Hebeeinrichtung ausgeübt wird, zumindest teilweise zu kompensieren, wird auch vorgeschlagen, dass die Kraftunterstützungseinrichtung eine Kraft auf die Hebeeinrichtung ausübt, deren Richtung im Wesentlichen entgegen der Richtung des Schwenkbewebung von der ersten Schwenkposition der Hebeeinrichtung in die zweite Schwenkposition der Hebeeinrichtung gerichtet ist. Dass von dem Standfuß auf die Hebeeinrichtung ausgeübte Drehmoment bewirkt, dass die Hebeeinrichtung sobald die Auflage über den Lotpunkt hinaus verschwenkt wurde, in Richtung der zweiten Schwenkposition beschleunigt wird. Um diese Beschleunigung abzubremsen bzw. zu kompensieren, übt die Kraftunterstützungseinrichtung eine entgegengesetzte Kraft auf die Hebeeinrichtung aus.

Um zu gewährleisten, dass die Kraftunterstützungseinrichtung ein genügend großes Drehmoment auf die Hebeeinrichtung ausübt, wird vorgeschlagen, dass die Kraftunterstützungseinrichtung in einem ersten Abstand vom Schwenkpunkt an der Hebeeinrichtung befestigt ist und dass die Auflage in einem zweiten Abstand von Schwenkpunkt an dem Rollenträger anliegt, wobei insbesondere der erste Abstand größer ist als der zweite Abstand.

Gemäß einem vorteilhaften Ausführungsbeispiel ist die Auflage auf dem Rollenträger rollend gelagert. Dies führt dazu, dass die Schwenkbewegung um den Schwenkpunkt der Hebeeinrichtung erleichtert ist.

Auch wird vorgeschlagen, dass der Rollenträger ein Führungsrohr aufweist. In diesem Führungsrohr kann der Mast geführt sein. Vorzugsweise ist das Führungsrohr mit zwei radial gegenüberliegenden, axial verlaufenden Langlöchern versehen. In diesen Langlöchern kann der Stift, um den die Hebeeinrichtung gelagert ist, geführt werden. Insbesondere wenn der Standfuß relativ zum Rollenträger bewegt wird, bewegt sich der Mast relativ zum fest am Rollenträger angeordneten Führungsrohr. Um zu ermöglichen, dass diese Bewegung durch das Führungsrohr nicht behindert wird, ist das Langloch vorgesehen.

Das Führungsrohr bewirkt, dass der Mast in einer rein vertikalen Bewegung zum Rollenträger bewegt wird und ein Verkanten des Rollenträgers zum Mast und somit zum Standfuß verhindert wird. Um ein Verdrehen zwischen Rollenträger und Standfuß zu verhindern, wird vorgeschlagen, dass der Standfuß parallel zur Vertikalbewegung ausgerichtete, in Richtung des Rollenträgers weisende Führungsstifte oder Dorne oder Nasen aufweist und dass der Rollenträger Öffnungen aufweist, in die die Führungsstifte, Dorne oder Naseneingreifen. Mit Hilfe der Führungsstifte, Dorne oder Nasen kann somit der Rollenträger am Standfuß geführt sein und ein Verkanten oder Verdrehen wird verhindert.

Um den Hub zwischen Boden und Standfuß möglichst gering zu halten, insbesondere wenn der Standfuß angehoben wird, wird vorgeschlagen, dass der Standfuß unterhalb des Rollenträgers angeordnet ist. In diesem Fall ist der Hub zwischen Standfuß und Erdboden nur gering, was die Bedienung des Ständers vereinfacht.

Wie eingangs bereits erläutert, ist der Standfuß dazu da, den Ständer zu stabilisieren. Um den Ständer vor einem Umkippen zu bewahren, muss der Standfuß ein hohes Gewicht aufweisen. Dieses hohe Gewicht kann beispielsweise dann gewährleistet sein, wenn der Standfuß zur Aufnahme von Gewichtselementen gebildet ist. In diesem Fall ist der Standfuß vorzugsweise eine ebene Platte. Der Standfuß kann auch eine Konstruktion aus Winkeln und/oder Profilen sein.

Die Hebeeinrichtung ist um den Schwenkpunkt gelagert. Um den Ständer zu verschieben übt eine Schubstange eine Kraft auf die Hebeeinrichtung aus, die in den Schwenkpunkt eingeleitet wird. Um zu verhindern, dass diese auf den Schwenkpunkt eingeleitete Kraft zu einem Umkippen des Ständers führt, muss das durch diese Kraft auf den Ständer bewirkte Drehmoment gering sein. Aus diesem Grunde sollte der Schwenkpunkt möglichst nahe am Standfuß sein, da dann das Drehmoment gegenüber dem Standfuß gering gehalten werden kann. Aus diesem Grunde wird vorgeschlagen, dass der Schwenkpunkt im Wesentlichen in oder unterhalb einer Hauptebene des Rollenträgers angeordnet ist. Eine Hauptebene des Rollenträgers kann eine obere Oberfläche des Rollenträgers sein. Vorzugsweise kann eine Hauptebene diejenige Ebene sein, die prozentual den größten Anteil an der Oberfläche des Rollenträgers ausmacht.

Gemäß einem vorteilhaften Ausführungsbeispiel wird vorgeschlagen, dass die Auflage im Wesentlichen unterhalb einer Hauptebene des Rollenträgers an einem nach unten weisenden Versatz des Rollenträgers anliegt. Dies ermöglicht die Anordnung der Hebeeinrichtung möglichst nahe an dem Standfuß. Hierdurch werden die durch die Schubstange und die Hebeeinrichtung beim Verschieben des Standfußes wirkenden Drehmomente minimiert und ein Verkanten des Standfußes verhindert.

Die Merkmale der genannten Vorrichtungen sind frei miteinander kombinierbar. Insbesondere können Merkmale der Beschreibung und/oder der abhängigen Ansprüche, auch unter vollständiger oder teilweise Umgehung von Merkmalen der unabhängigen Ansprüche, in Alleinstellung oder frei miteinander kombiniert eigenständig erfinderisch sein.

Nachfolgend wird der Gegenstand anhand einer Ausführungsbeispiele zeigenden Zeichnung näher erläutert. In der Zeichnung zeigen:
- Fig. 1: eine schematische Seitenansicht eines mobilen Ständers in einer ersten Endposition der Hebeeinrichtung;
- Fig. 2: eine schematische Seitenansicht des mobilen Ständers nach Figur 1 in einer Zwischenposition der Hebeeinrichtung;
- Fig. 3: eine schematische Seitenansicht des mobilen Ständers nach Figur 1 in einer weitern Zwischenposition der Hebeeinrichtung;
- Fig. 4: eine schematische Seitenansicht eines mobilen Ständers nach Figur 1 in einer zweiten Endposition der Hebeeinrichtung;
- Fig. 5: eine schematische Seitenansicht eines weiteren Ausführungsbeispiels eines mobilen Ständers in einer ersten Endposition der Hebeeinrichtung;
- Fig. 6: eine schematische Seitenansicht des mobilen Ständers nach Figur 5 in einer zweiten Endposition der Hebeeinrichtung;
- Fig. 7: eine Draufsicht auf einen mobilen Ständer gemäß Figur 1;
- Fig. 8: eine schematische Seitenansicht eines weiteren Ausführungsbeispiels eines mobilen Ständers in einer ersten Endposition der Hebeeinrichtung;
- Fig. 9: eine schematische Seitenansicht des mobilen Ständers nach Figur 8 in einer zweiten Endposition der Hebeeinrichtung;

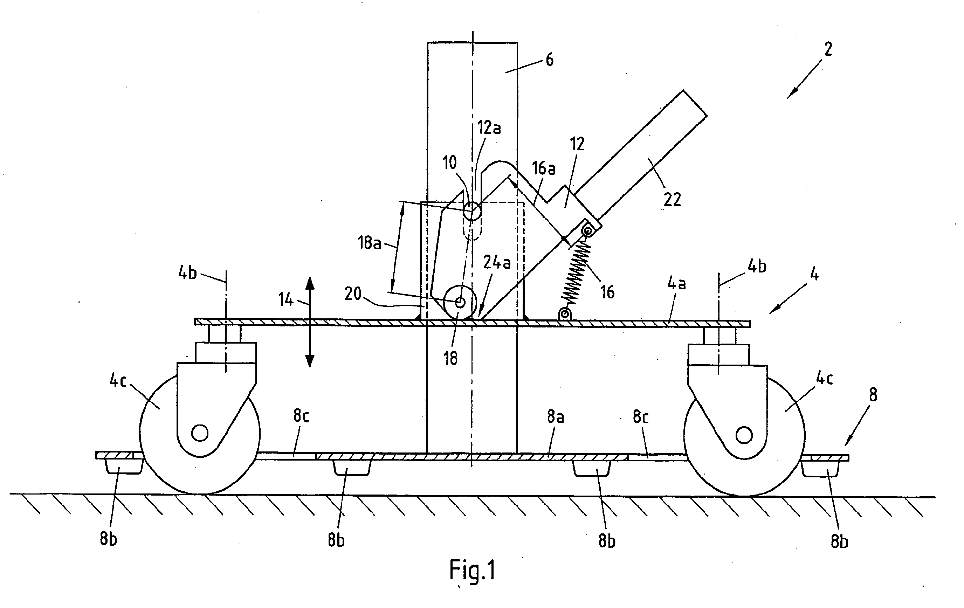

Fig. 1 zeigt einen mobilen Ständer 2. Der mobile Ständer 2 weist einen Rollenträger 4 auf. Der Rollenträger 4 ist gebildet durch eine vorzugsweise aus Stahlblech geformte Platte 4a und um die Achsen 4b drehbare, fest mit der Platte 4a verbundene Rollen 4c. Mit Hilfe der Rollen 4c lässt sich der mobile Ständer 2 bei geringem Kraftaufwand verschieben, da die Rollen 4c über den Boden rollen.

Der mobile Ständer 2 weist ferner einen Mast 6 auf. Der Mast 6 ist vorzugsweise fest mit einem Standfuß 8 verbunden. Der Mast 6 ist vorzugsweise ein Rohr oder Dorn und dient zur Befestigung von diversen Anbauteilen, wie beispielsweise Schirmen, Wäscheständern, Verkaufsständern, Kleidungsständern, Signalschildern, Sportgeräten oder dergleichen. Die an dem Mast 6 angeordneten Gegenstände sind meist schwer und ragen häufig hoch über den mobilen Ständer 2 hinaus. Dadurch werden große Kräfte und Drehmomente auf dem mobilen Ständer 2 ausgeübt, welche durch den Standfuß 8 aufgenommen werden müssen, um den mobilen Ständer 2 an Ort und Stelle zu halten. Aus diesem Grunde ist der Standfuß 8 vorzugsweise aus einer Platte 8a , die vorzugsweise aus Stahl gebildet ist, geformt.

Rollenträger 4 und Standfuß 8 können zusätzlich oder alternativ zu ihrer jeweiligen Platte 4a, 8a aus Winkelblechen und/oder Profilen gebildet sein.

In der Platte 8a sind Öffnungen 8c, die es erlauben, dass die Rollen 4c um die Achse 4b schwenken können. Die Öffnungen erlauben somit ein freies Rollen der Rollen 4c in alle Richtungen. Der Standfuß 8 verfügt ferner über nach unten weisende Sockelelemente 8b. Auf den Sockelelementen 8b kann der Standfuß 8 auf dem Boden aufstehen.

Der Mast 6 ist fest an dem Standfuß 8 angeordnet und mit diesem verbunden. In dem Mast 6 ist vorzugsweise ein Stift 10 radial entlang des Durchmessers des Mastes 6 angeordnet. Der Stift 10 dient als Schwenkpunkt für eine Hebeeinrichtung 12. Die Hebeeinrichtung 12 kann um den Stift 10 herum verschwenkt werden. Beim Verschwenken der Hebeeinrichtung 12 um den Stift 10 wird der Standfuß 8entlang der Vertikalbewegung 14 relativ zum Rollenträger 4 bewegt. Die Hebeeinrichtung ist in der Fig.1 in einer ersten Endposition verschwenkt.

Die Hebeeinrichtung 12 verfügt über eine Bohrung oder ein Langloch 12a, in welches der Stift 10 eingreift. Über das Langloch 12a wird gewährleistet, dass sich die Hebeeinrichtung 12 nicht nur um den Stift 10 drehen kann, sondern auch eine translatorische Bewegung relativ zum Stift 10 ausüben kann.

Die Vertikalbewegung 14 des Standfußes 8zum Rollenträger 4 wird durch ein mit dem Rollenträger 4 verbundenes Führungsrohr 20 unterstützt. Das Führungsrohr 20 verhindert, dass der Mast 6 gegenüber der dargestellten Position um den Rollenträger 4 verschwenkt.

Am Rollenträger 4 ist eine Feder 16 befestigt. Die Feder 16 ist auf der anderen Seite an der Hebeeinrichtung 12 befestigt. Die Feder 16 ist in einem Abstand 16a vom Mittelpunkt des Stiftes 10 an die Hebeeinrichtung 12 befestigt.

Die Hebeeinrichtung 12 liegt über eine Rolle 18 auf dem Rollenträger 4 auf. Die Rolle 18 ermöglicht ein leichtes Verschwenken der Hebeeinrichtung 12 um den Stift 10, da so beim Verschwenken der Hebeeinrichtung 12 um den Stift 10 lediglich Rollreibungskräfte am Rollenträger 4 auftreten.

Die Rolle 18 liegt in einem Abstand 18a vom Mittelpunkt des Stiftes 10 auf der Oberfläche des Rollenträgers 4 bzw. der Platte 4a auf. Der Abstand 18a ist vorzugsweise kleiner als der Abstand 16a. Wie nachfolgend noch gezeigt werden wird, kann über den Abstand 16a und den Abstand 18a eine Beeinflussung der Drehmomente auf die Hebeeinrichtung 12 erfolgen, derart, dass diese für den Benutzer optimiert sind.

An der Hebeeinrichtung 12 ist vorzugsweise eine Schubstange 22 angeordnet. In der dargestellten Position kann mittels der Schubstange 22 eine Kraft auf den Rollenträger 4 über den Stift 10 und das Führungsrohr 20 ausgeübt werden. Diese Kraft führt dazu, dass der Ständer 2 mittels der Rollen 4c verschoben werden kann.

Die Hebeeinrichtung 12 ist in der Fig. 1 in einer ersten Endposition verschwenkt. Die erste Endposition wird durch die Auflage 24a definiert. Die Auflage 24a ist durch Kanten der Hebeeinrichtung 12 gebildet, die in Form einer Auflagefläche auf der Platte 4a aufliegen. Diese Auflagefläche definiert eine Schwenkposition der Hebeeinrichtung 12 bei der der Rollenträger 4 abgesenkt bzw. der Standfuß 8 angehoben ist und die Rollen 4c am Boden aufliegen.

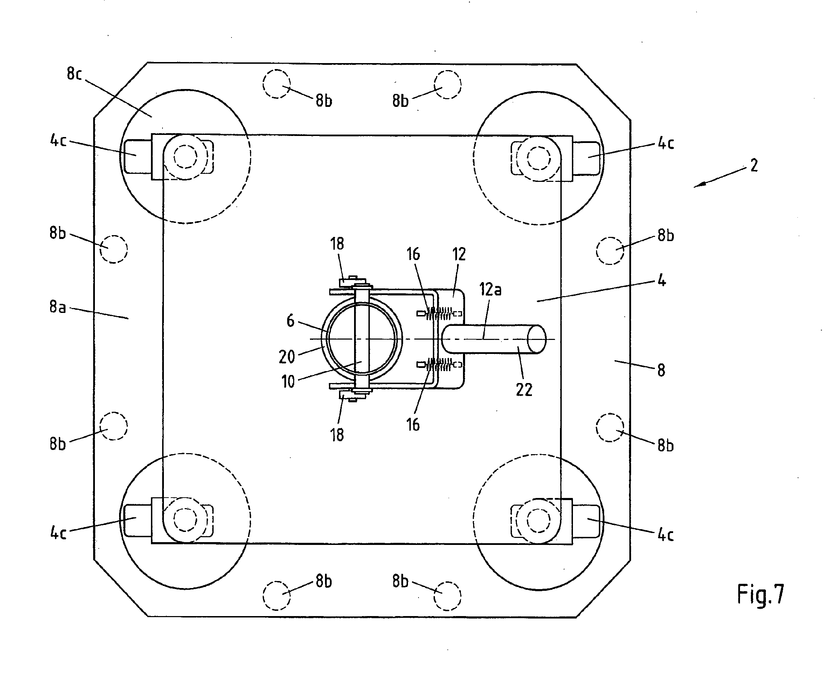

Fig. 7 zeigt eine Draufsicht auf einen mobilen Ständer 2. Zu erkennen ist die Platte 8a des Standfußes 8. In der Platte 8a sind die Öffnungen 8c vorgesehen, in denen sich die Rollen 4c des Rollenträgers 4 bewegen können. Ferner ist zu erkennen, dass der Stift 10 entlang des Durchmessers durch den Mast 6 geführt ist. Der Stift 10 steht vom Mast 6 radial nach außen ab und bietet somit einen Anlenkpunkt für die Hebeeinrichtung 12. Zu erkennen ist, dass der Mast 6 vom Führungsrohr 20 umgeben ist. Ferner ist zu erkennen, dass die Hebeeinrichtung 12 U-förmig um den Mast 6 bzw. das Führungsrohr 20 gelegt ist. Die Schubstange 22 ist an der Hebeeinrichtung 12 angeordnet. Ferner ist zu erkennen, dass beidseitig einer Mittelachse 12a der Hebeeinrichtung 12 Federn 16 angeordnet sind. Die Anordnung von Federn 16 beidseitig der Mittelachse 12a führt zu einem gleichmäßigen Krafteintrag auf die Hebeeinrichtung 12, was verhindert, dass sich die Hebeeinrichtung 12 gegenüber dem Stift 10 verkantet.

Der gegenständliche mobile Ständer 2 zeichnet sich dadurch aus, dass bei einem Verschwenken der Hebeeinrichtung 12 um den Stift 10 die von dem Standfuß 8 auf die Hebeeinrichtung 12 wirkende Kraft bzw. das dadurch eingeleitete Drehmoment durch die Feder 16 im Wesentlichen kompensiert wird. Dieser Mechanismus wird nachfolgend gezeigt.

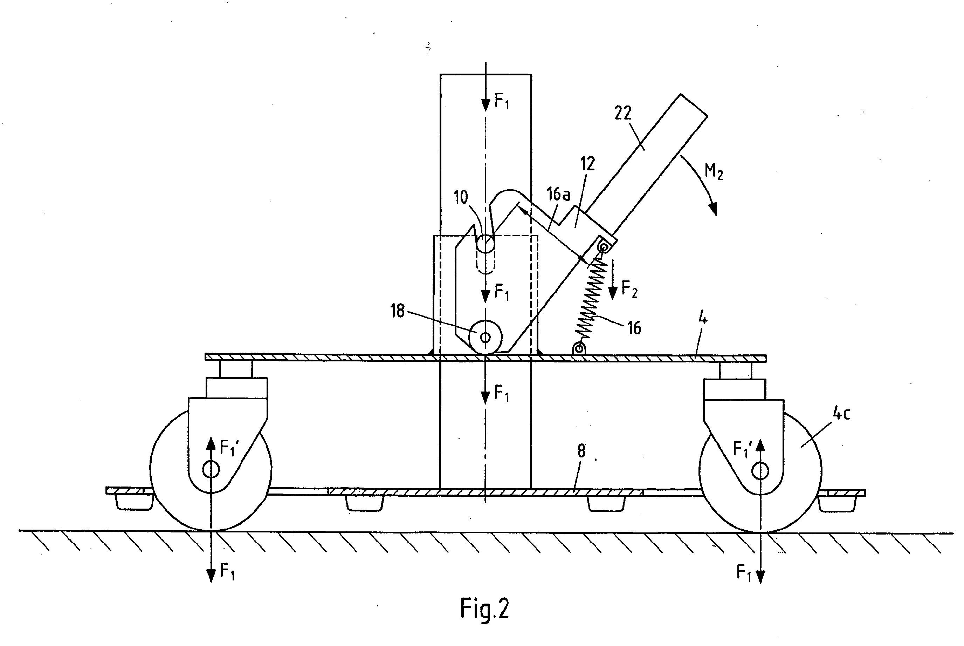

In der Fig. 2 ist der mobile Ständer gemäß der Fig. 1 dargestellt, bei dem der Standfuß 8 weiterhin angehoben ist, und die Hebeeinrichtung 12 derart um den Stift 10 verschwenkt wurde, dass die Rolle 18 unmittelbar im Lot zu dem Stift 10 steht. In der dargestellten Konfiguration wirkt eine Gewichtskraft F1 des Standfußes 8 auf den Stift 10. Die Gewichtskraft F1 wird vom Stift 10 auf die Hebeeinrichtung 12 übergeleitet und diese überträgt die Gewichtskraft F1 über die Rolle 18 auf den Rollenträger 4. Der Rollenträger 4 überträgt die Gewichtskraft F1 auf die Rollen 4c die diese Gewichtskraft durch die Kraft F1' aufnehmen. Wie zu erkennen ist, ist die Auflage der Rolle 18 unmittelbar im Lot zum Stift 10 und die Gewichtskraft F1 bewirkt kein Drehmoment auf die Hebeeinrichtung 12. Die Feder 16 ist teilweise gespannt und die nach unten wirkende Federkraft F2 führt zu einem Drehmoment M2 um den Stift 10 abhängig von der Kraft F2 und dem Abstand 16a. Zum Verschwenken der Hebeeinrichtung 12 muss ein Benutzer das Drehmoment M2 über die Schubstange 22 überwinden.

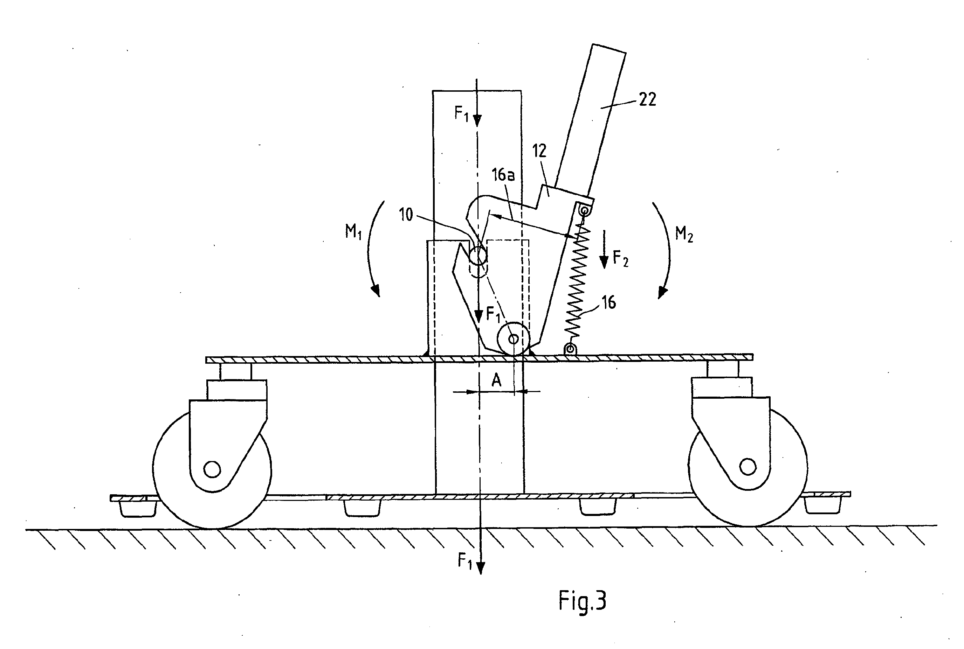

Wenn der Benutzer die Hebeeinrichtung 12 mittels der Schubstange 22 weiter um den Stift 10 verschwenkt, so erreicht die Hebeeinrichtung die in Fig. 3 gezeigte Position. Bei der in Fig. 3 gezeigten Position wirken die folgenden Kräfte.

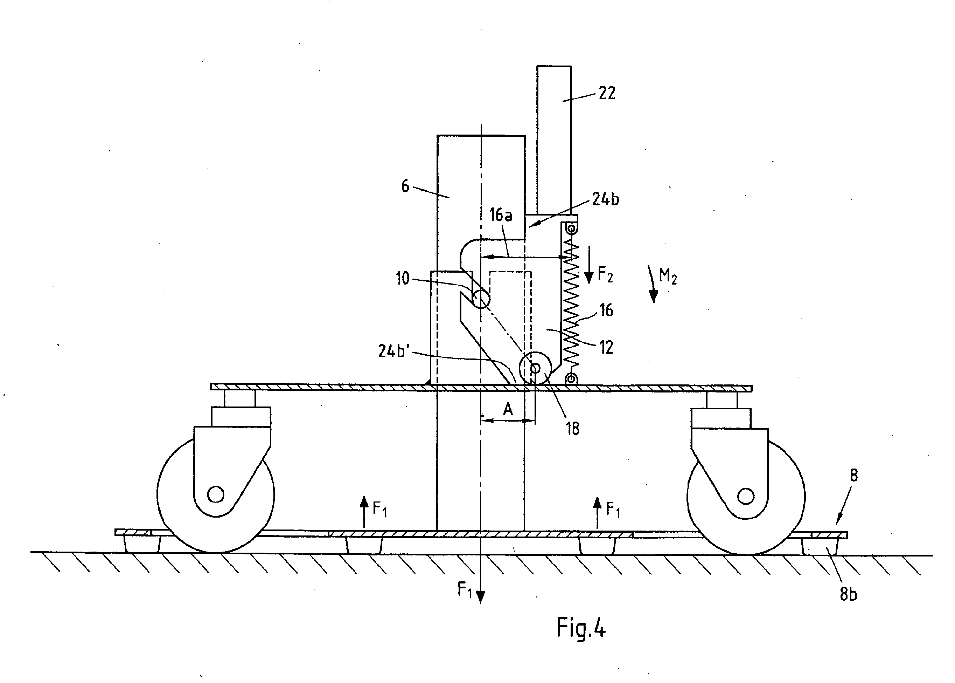

Die Gewichtskraft F1 des Standfußes 8 wirkt über den Stift 10 auf die Hebeeinrichtung 12. Die Rolle 18 liegt auf dem Rollenträger 4 in einem Abstand A vom Lot zum Stift 10 auf. Der Abstand A wächst zwischen der in Fig. 2 gezeigten Position und der in Fig. 4 gezeigten Position beim Verschwenken der Hebeeinrichtung 12 um den Stift 10 stetig an. Durch den Abstand A bewirkt die Gewichtskraft F1, die auf die Hebeeinrichtung 12 wirkt, ein Drehmoment M1 auf die Hebeeinrichtung 12. Dieses Drehmoment M1 wird mit wachsendem Abstand A größer, solange, bis der Standfuß 8 am Boden aufliegt und die Rollen 4c des Rollenträgers 4 vollständig zwischen der Unterseite des Standfußes 8 und dem Rollenträger 4 liegen wie in Fig. 4 gezeigt.

Da der Standfuß 8 regelmäßig mit großen Gewichten, insbesondere mehr als 30kg, vorzugsweise mehr als 60kg, insbesondere mehr als 100kg und sogar mehr als 150kg bestückt ist, ist das Drehmoment M1 abhängig vom Abstand A groß. Das Drehmoment M1 führt dazu, dass die Hebeeinrichtung 12 und die Schubstange 22 in Richtung des Mastes 6 beschleunigt werden. Aufgrund der hohen Gewichtskraft F1 ist diese Beschleunigung groß und die Schubstange 22 könnte gegebenenfalls einem Benutzer aus der Hand gerissen werden. Im schlechtesten Fall reißt die Schubstange 22 die Hand eines Benutzers gegen den Mast 6 und es kommt zu Quetschungen.

Um dies zu verhindern, ist die Feder 16 in dem Abstand 16a von dem Stift 10 an der Hebeeinrichtung 12 befestigt. Die Feder 16 bewirkt eine Kraft F2 im Abstand 16a von dem Stift 10 auf die Hebeeinrichtung 12. Diese Kraft F2 und der Abstand 16a bewirken das Drehmoment M2 um den Stift 10. Die Feder F2 ist so gewählt, dass diese im Wesentlichen das Drehmoment M1 kompensiert. Hierbei ist die Federkraft F2 und der Abstand 16a auf der einen Seite und die Gewichtskraft F1 des Standfußes 8 und der Abstand A auf der anderen Seite zu berücksichtigen. Vorzugsweise ist die Federkraft F2 und der Abstand 16a so gewählt, dass das Drehmoment M2 gleich dem Drehmoment M1 bei einem Abstand A zwischen der Position in Fig.3 und der Position in Fig. 4 ist. Vorzugsweise ist das Drehmoment M2 zumindest nicht größer als das Drehmoment M1 bei dem Abstand A gemäß Fig. 4.

Die Hebeeinrichtung 22 ist in der Fig. 4 in einer zweiten Endposition verschwenkt. Diese Endposition wird durch die Anlageflächen 24b, 24b' definiert, die dazu führen, dass die Hebeeinrichtung 12 nicht weiter verschwenkt werden können. Die Auflagefläche 24b liegt am Mast an. Die Auflagefläche 24b' ist durch Kanten der Hebeeinrichtung 12 gebildet, welche in der Art einer ebenen Fläche auf dem Rollenträger 4 aufliegen. In der in Fig. 4 gezeigt Position liegt der Standfuß 8 mit seinen Sockelelementen 8b auf dem Erdboden auf. Die Gewichtskraft F1 des Standfußes wird unmittelbar durch die Sockelelemente 8b aufgenommen. Der Abstand 16a ist so gewählt, dass das durch die Federkraft F2 bewirkte Drehmoment M2 so ist, dass die Hebeeinrichtung 12 in der gezeigten Position verbleibt.

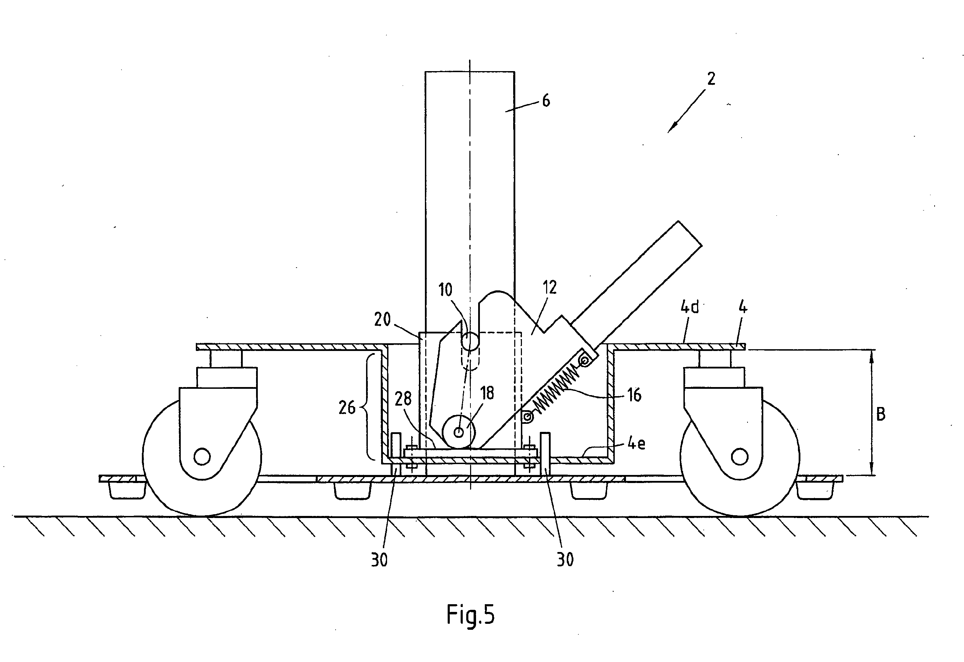

Fig. 5 zeigt ein weiteres Ausführungsbeispiel eines mobilen Ständers 2. Bei der Fig. 5 hat der Rollenträger 4 einen Versatz 26 derart, dass eine Hauptfläche 4d des Rollenträgers 4 oberhalb einer Nebenfläche 4e des Rollenträgers 4 ist. Zu erkennen ist, dass das Führungsrohr 20 fest an dem Rollenträger 4 im Bereich der Nebenfläche 4e, d.h. unterhalb der Hauptfläche 4b innerhalb des Versatzes 26 befestigt ist. Der Stift 10 im Mast 6 ist im Wesentlichen auf der Höhe der Hauptfläche 4d. Die Rolle 18 ist gelagert auf einer Führungsfläche 28 innerhalb des Versatzes 26.

Zu erkennen ist, dass die Feder 16 zum Einen an der Hebeeinrichtung 12 und zum Anderen an dem Führungsrohr 20 befestigt ist. Auch diese Feder 16 führt zum Eintrag eines Drehmoments M2 beim Verschwenken der Hebeeinrichtung 12 wie zuvor beschrieben.

Um zu verhindern, dass sich der Rollenträger 4 gegenüber dem Standfuß 8 verdreht, sind Führungsstifte 30 vorgesehen. Die Führungsstifte 30 verlaufen parallel zur Achse des Mastes 6. Die Führungsstifte 30 greifen in Öffnungen innerhalb des Rollenträgers 4 ein, so dass der Rollenträger 4 über dem Standfuß 8 nicht verdreht werden kann.

Die Fig. 5 zeigt den mobilen Ständer 2 mit angehobenem Standfuß 8, wobei der Abstand B zwischen Rollenträger 4 und Standfuß 8 ein erster, kleinerer Abstand ist.

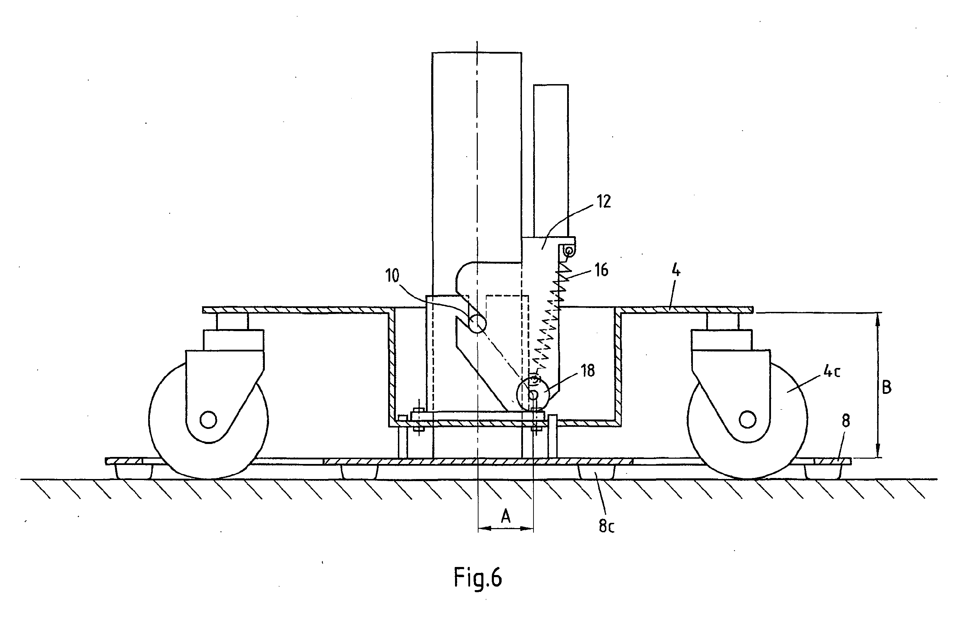

Bei der Fig. 6 ist die Hebeeinrichtung 12 um den Stift verschwenkt worden. Der Standfuß 8 ist abgesenkt. Hierdurch ist der Abstand B zwischen dem Rollenträger 4 und dem Standfuß 8 so vergrößert worden, dass er größer als der erste Abstand B ist und dass der Standfuß 8 nunmehr mit seinen Sockelelementen 8c auf dem Boden aufliegt und die Rollen 4c vollständig zwischen Rollenträger 4 und unterer Begrenzungsfläche des Standfußes 8 liegen. Auch hier ist zu erkennen, dass aufgrund des Abstands A zwischen der Rolle 18 und dem Stift 10 ein Drehmoment M1 auf die Hebeeinrichtung 12 während des Verschwenkens der Hebeeinrichtung 12 wirkt, welches durch das durch die Federkraft der Feder 16 bewirkte Drehmoment M2 im Wesentlichen kompensiert wird.

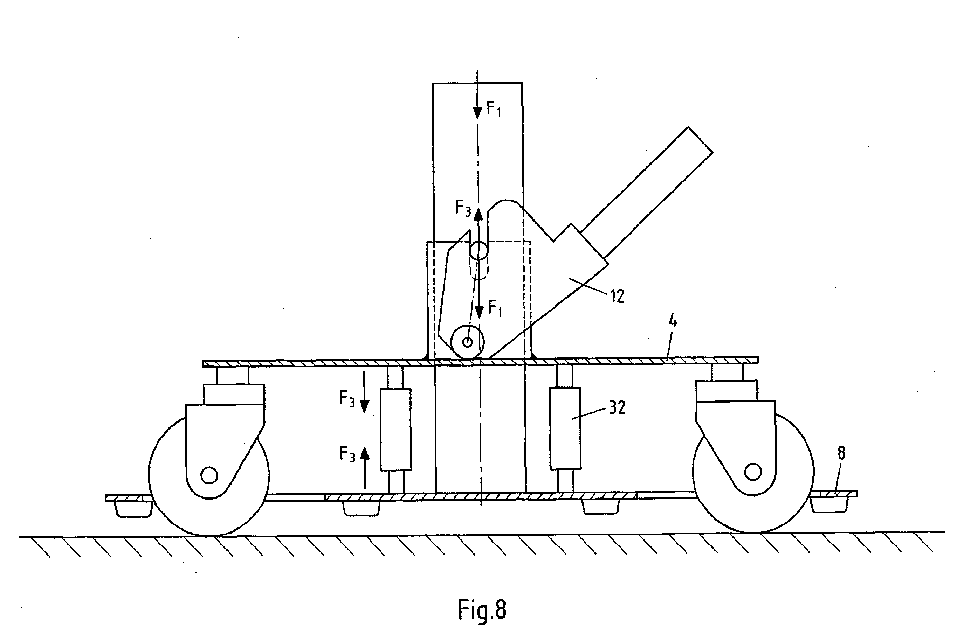

Fig. 8 zeigt ein weiteres Ausführungsbeispiel, bei dem die Kraftunterstützungseinrichtung durch eine zwischen dem Rollenträger 4 und dem Standfuß 8 angeordnete Luftfeder 32 gebildet ist. Die Luftfeder 32 kann auch durch einen Stoßdämpfer oder eine Hydraulikfeder ersetzt sein. Die Luftfeder 32 ist so gestaltet, dass diese bei einem Auseinanderbewegen zwischen Rollenträger 4 und Standfuß 8 eine Kraft F3 auf den Rollenträger 4 und den Standfuß 8 ausübt. Diese Kraft führt dazu, dass die Gewichtskraft F1 des Standfußes 8 am Stift 10 durch eine Kraft F3 zumindest teilweise kompensiert wird. Auch dies führt dazu, dass das Drehmoment M1, welches bei einem Verschwenken der Hebeeinrichtung 12 um den Stift 10 entsteht, zumindest teilweise kompensiert wird.

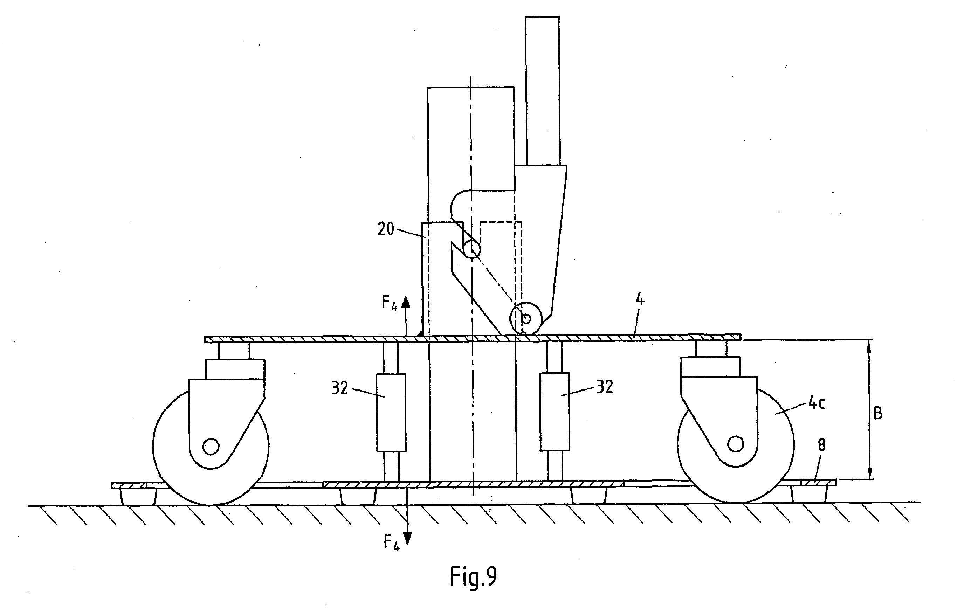

Zu erkennen ist in der Fig. 9, dass der Rollenträger 4 im Abstand B zum Standfuß 8 ist. Die Luftfeder 32 ist dergestalt, dass sie wie ein Dämpfungselement bei einer Bewegung die Kraft F3 aufbringt. In einer Endposition, d.h. in einer statischen Position übt die Luftfeder 32 jedoch eine Kraft F4 auf den Rollenträger 4 und den Standfuß 8 aus, so dass der Rollenträger 4 vom Standfuß 8 weggedrückt wird. Die Kraft F4 ist vorzugsweise gleich oder größer als die Gewichtskraft des Rollenträgers samt Rollen 4c und Führungsrohr 20.

Wie aufgezeigt worden ist, lässt sich durch eine geeignete Anordnung von Kraftunterstützungseinrichtungen ein Drehmoment, welches auf die Hebeeinrichtung wirkt kompensieren, wodurch der Nutzerkomfort des mobilen Ständers erhöht wird.

## Patentansprüche

1. Mobiler Ständer, insbesondere mobiler Schirmständer, mit
- einem Rollenträger (4),
- einem Mast (6),
- einem fest an dem Mast (6) angeordneten Standfuß (8), und
- einer an einem zum Standfuß (8) ortsfesten Schwenkpunkt schwenkbar angelenkten Hebeeinrichtung (12), so dass eine Schwenkbewegung der Hebeeinrichtung (12) um den Schwenkpunkt (10) den Standfuß (8) relativ zum Rollenträger (4) in einer Vertikalbewegung absenkt und/oder anhebt,
**dadurch gekennzeichnet, dass**
- eine Kraftunterstützungseinrichtung (16, 32) bei der Schwenkbewegung zum Absenken des Standfußes (8) dem vom Standfuß (8) über den Schwenkpunkt (10) auf die Hebeeinrichtung (12) ausgeübte Drehmoment zumindest teilweise entgegenwirkt.

2. Mobiler Ständer nach Anspruch 1, **dadurch gekennzeichnet, dass** die Kraftunterstützungseinrichtung (16 , 32) eine zwischen Hebeeinrichtung (12) und Rollenträger (4) angeordnete Feder oder eine zwischen Standfuß (8) und Rollenträger (4) angeordnete Feder (16) ist, wobei eine Feder (16) insbesondere eine Schraubfeder, eine Biegefeder, eine Torsionsfeder, eine Luftfeder, eine Gasdruckfeder oder eine Elastomerfeder ist.

3. Mobiler Ständer nach Anspruch 1 bis 2, **dadurch gekennzeichnet, dass** der Schwenkpunkt (10) am Mast (6) oder am Standfuß (8) angeordnet ist.

4. Mobiler Ständer nach einem der Ansprüche 1 bis 3, **dadurch gekennzeichnet, dass** die Hebeeinrichtung (12) eine um den Schwenkpunkt (10) gelagerte, am Rollenträger (4) anliegende Auflage aufweist.

5. Mobiler Ständer nach Anspruch 4, **dadurch gekennzeichnet, dass** die Auflage der Hebeeinrichtung (12) bei angehobenem Standfuß (8) in einem ersten Winkel in einer ersten Richtung zum Lot des Schwenkpunktes (10) an dem Rollenträger (4) anliegt und dass die Auflage bei abgesenktem Standfuß (8) in einem Winkel in einer der ersten Richtung entgegengesetzten zweiten Richtung zum Lot des Schwenkpunktes (10) an dem Rollenträger (4) anliegt.

6. Mobiler Ständer nach Anspruch 5, **dadurch gekennzeichnet, dass** sich die Auflage beim Absenken des Standfußes relativ zum Rollenträger (4) über einen Punkt, welcher im Lot zum Schwenkpunkt (10) liegt, hinaus entlang des Rollenträgers (4) bewegt.

7. Mobiler Ständer nach einem der Ansprüche 1 bis 6, **dadurch gekennzeichnet, dass** die Hebeeinrichtung (12) zwischen einer ersten Schwenkposition und einer zweiten Schwenkposition gelagert ist und dass in der ersten Schwenkposition der Standfuß (8) und Rollenträger (4) einen ersten Abstand haben, so dass der Standfuß (8) relativ zum Rollenträger (4) angehoben ist und dass in der zweiten Schwenkposition der Standfuß (8) und Rollenträger (4) einen zweiten, größeren als den ersten Abstand haben, so dass der Standfuß (8) relativ zum Rollenträger (4) abgesenkt ist.

8. Mobiler Ständer nach Anspruch 7, **dadurch gekennzeichnet, dass** der zweite Abstand so groß ist, dass eine an dem Rollenträger (4) angeordnete Rolle in der zweiten Schwenkposition vollständig zwischen Rollenträger (4) und einer Unterseite des Standfußes (8) angeordnet ist.

9. Mobiler Ständer nach einem der Ansprüche 1 bis 8, **dadurch gekennzeichnet, dass** die Kraftunterstützungseinrichtung (16, 32) eine Kraft auf die Hebeeinrichtung (12) ausübt, deren Richtung im wesentlichen entgegen der Richtung der Schwenkbewegung von einer ersten Schwenkposition der Hebeeinrichtung (12) in eine zweite Schwenkposition der Hebeeinrichtung (12) gerichtet ist.

10. Mobiler Ständer nach einem der Ansprüche 4 bis 9, **dadurch gekennzeichnet, dass** die Kraftunterstützungseinrichtung (16, 32) in einem ersten Abstand vom Schwenkpunkt (10) an der Hebeeinrichtung (12) befestigt ist und dass die Auflage in einem zweiten Abstand vom Schwenkpunkt (10) an dem Rollenträger (4) anliegt, wobei insbesondere der erste Abstand größer ist als der zweite Abstand.

11. Mobiler Ständer nach Anspruch 4 bis 10, **dadurch gekennzeichnet, dass** die Auflage auf dem Rollenträger (4) rollend gelagert ist.

12. Mobiler Ständer nach einem der Ansprüche 1 bis 11, **dadurch gekennzeichnet, dass** der Rollenträger (4) ein Führungsrohr aufweist, und dass der Mast (6) in dem Führungsrohr geführt ist.

13. Mobiler Ständer nach einem der Ansprüche 1 bis 12, **dadurch gekennzeichnet, dass** der Standfuß (8) parallel zur Vertikalbewegung ausgerichtete, in Richtung des Rollenträgers (4) weisende Führungsstifte aufweist und dass der Rollenträger (4) Öffnungen aufweist, in die die Führungsstifte eingreifen.

14. Mobiler Ständer nach einem der Ansprüche 1 bis 13, **dadurch gekennzeichnet, dass** der Schwenkpunkt (10) im Wesentlichen in oder unterhalb einer Hauptebene des Rollenträgers (4) angeordnet ist.

15. Mobiler Ständer nach einem der Ansprüche 4 bis 14, **dadurch gekennzeichnet, dass** die Auflage im Wesentlichen unterhalb einer Hauptebene des Rollenträgers (4) an einem Versatz des Rollenträgers (4) anliegt.

## Claims

1. Mobile stand, in particular mobile umbrella stand, comprising
- a roller fixture (4),
- a pole (6),
- a foot (8) fixedly arranged on the pole (6), and
- a lifting device (12) pivotably hinged at a pivot point being in a fixed position to the foot (8) so that a pivoting movement of the lifting device (12) about the pivot point (10) lowers and/or raises the foot (8) in a vertical direction relative to the roller fixture (4),
**characterised in that**
a force assistance device (16, 32) at least partially counteracts the torque exerted on the lifting device (12) by the foot (8) via the pivot point (10) during a pivoting movement to lower the foot (8).

2. Mobile stand according to claim 2, **characterised in that** the force assistance device (16, 32) is a spring arranged between lifting device (12) and roller fixture (4) or a spring (16) arranged between foot (8) and roller fixture (4), wherein a spring (16) is in particular a helical spring, a bending spring, a torsion spring, a pneumatic spring, a gaspressurised spring or an elastomer spring.

3. Mobile stand according to claim 1 or 2, **characterised in that** the pivot point (10) is arranged on the pole (6) or on the foot (8).

4. Mobile stand according to any one of claims 1 to 3, **characterised in that** the lifting device (12) has a support mounted about the pivot point (10) resting on the roller fixture (4).

5. Mobile stand according to claim 4, **characterised in that** when the foot (8) is raised, the support of the lifting device (12) rests on the roller fixture (4) at a first angle to the perpendicular of the pivot point (10) in a first direction and that when the foot (8) is lowered, the support rests on the roller fixture (4) at an angle to the perpendicular of the pivot point (10) in a second direction opposite to the first direction.

6. Mobile stand according to claim 5, **characterised in that** when the foot is lowered relative to the roller fixture (4), the support moves along the roller fixture (4) beyond a point perpendicular to the pivot point (10).

7. Mobile stand according to any one of claims 1 to 6, **characterised in that** the lifting device (12) is mounted between a first pivot position and a second pivot position and that in the first pivot position the foot (8) and roller fixture (4) are spaced at a first distance and consequently the foot (8) is raised relative to the roller fixture (4), and that in the second pivot position, the foot (8) and roller fixture (4) are spaced at a second, greater distance than the first distance, and consequently the foot (8) is lowered, relative to the roller fixture (4).

8. Mobile stand according to claim 7, **characterised in that** the second distance is so big that in the second pivot position a roller arranged on the roller fixture (4) is arranged entirely between roller fixture (4) and an underside of the foot (8).

9. Mobile stand according to any one of claims 1 to 8, **characterised in that** the force assistance device (16, 32) exerts a force on the lifting device (12) the direction of which is substantially counter to the direction of the pivoting movement from a first pivot position of the lifting device (12) to a second position pivot position of the lifting device (12).

10. Mobile stand according to any one of claims 4 to 9, **characterised in that** the force assistance device (16, 32) is attached to the lifting device (12) at a first distance from the pivot point (10) and that the support rests on the roller fixture (4) at a second distance from the pivot point (1) wherein the first distance is greater than the second distance.

11. Mobile stand according to claims 4 to 10, **characterised in that** the support is mounted on the roller fixture (4) on roller bearings.

12. Mobile stand according to any one of claims 1 to 11 **characterised in that** the roller fixture (4) has a guide tube and that the pole (6) is guided into the guide tube.

13. Mobile stand according to any one of claims 1 to 12, **characterised in that** the foot (8) has guide pegs aligned parallel to the vertical movement and pointing towards the roller fixture (4) and that the roller fixture (4) has openings in which the guide pegs engage.

14. Mobile stand according to any one of claims 1 to 13 **characterised in that** the pivot point (10) is arranged substantially on or below a main plane of the roller fixture (4).

15. Mobile stand according to any one of claims 4 to 14 **characterised in that** the support plate rests against an offset of the roller fixture (4) substantially below a main plane of the roller fixture (4).

## Revendications

1. Support mobile, en particulier porte-parapluie, qui comprend
- un support de roulettes (4),
- une colonne (6),
- un pied servant de base (8), qui est fixé à la colonne (6), et
- un dispositif de levage (12) pivotant, qui est articulé à un point de pivotement fixe par rapport au pied servant de base (8), de telle manière qu'un mouvement de pivotement du dispositif de levage (12) autour du point de pivotement (10) provoque un abaissement et / ou une élévation de la base (8) par rapport au support de roulettes (4), **caractérisé en ce que**
- lors du mouvement de pivotement destiné à abaisser la base (8), un dispositif d'assistance de force (16, 32) agit, au moins partiellement, contrairement, au couple de rotation qui est exercé par le pied servant de base (8) sur le dispositif de levage (12), par l'intermédiaire du point de pivotement (10).

2. Support mobile selon la revendication 1, **car actérisé** en ce que le dispositif d'assistance de force (16, 32) est un ressort, qui est disposé entre le dispositif de levage (12) et le support de roulettes (4), et / ou un ressort (16), qui est disposé entre le pied servant de base (8) et le support de roulettes (4), sachant qu'un ressort (16) est, en particulier, un ressort spiral, un ressort à torsion, un coussin d'air, un ressort à pression de gaz ou un ressort élastomère.

3. Support mobile selon les revendications 1 à 2, **caractérisé en ce que** le point de pivotement (10) est disposé sur la colonne (6) ou sur le pied servant de base (8).

4. Support mobile selon l'une des revendications 1 à 3, **caractérisé en ce que** le dispositif de levage (12) est doté d'un appui qui, monté autour du point de pivotement (10), porte contre le support de roulettes (4).

5. Support mobile selon la revendication 4, **car actérisé** en ce que. quand le pied servant de base (8) est en position élevée, l'appui du dispositif de levage (12) porte contre le support de roulettes (4) en formant un premier angle, dans une première direction perpendiculaire au point de pivotement (10), et que, quand le pied servant de base (8) est abaissé, la surface d'appui porte contre le support de roulettes (4) en formant un angle dans une deuxième direction perpendiculaire au point de pivotement (10).

6. Support mobile selon la revendication 5 **cara ctérisé** en ce que, lors de l'abaissement du pied servant de base par rapport au support de roulettes (4), l'appui est déplacé vers l'extérieur, le long du support de roulettes (4), au-delà d'un point, qui est perpendiculaire au point de pivotement (10).

7. Support mobile selon l'une des revendications 1 à 6, **caractérisé en ce que** le dispositif de levage (12) est monté entre une première position de pivotement et une deuxième position de pivotement e t q u e, dans la première position de pivotement, le pied servant de base (8) et le support de roulettes (4) sont distancés d'un premier intervalle, de sorte que le pied servant de base (8) est élevé par rapport au support de roulettes (4) et que, dans la deuxième position de pivotement, le pied servant de base (8) et le support de roulettes (4) sont distancés d'un intervalle qui est plus grand que le premier, de sorte que le pied servant de base (8) est relativement abaissé par rapport au support de roulettes (4).

8. Support mobile selon la revendication 7, **ca ractérisé** en ce que le deuxième intervalle est d'une grandeur telle que, dans la deuxième position de pivotement, une roulette, qui équipe le support de roulettes (4), se trouve complètement située entre le support de roulettes (4) et une face inférieure du pied servant de base (8).

9. Support mobile selon l'une des revendications 1 à 8, **caractérisé en ce que** le dispositif d'assistance de force (16, 32) exerce sur le dispositif de levage (12) une force dont la direction est dirigée sensiblement à l'opposé de la direction du mouvement de pivotement d'une première position de pivotement du dispositif de levage (12) dans une deuxième position du dispositif de levage (12).

10. Support mobile selon l'une des revendications 4 à 9, **caractérisé en ce que** le dispositif d'assistance de force (16, 32) est fixé sur le dispositif de levage (12), à une première distance du point de pivotement (10) et que l'appui porte contre le support de roulettes (4), à une deuxième distance du point de pivotement (10), sachant, en particulier, que la première distance est plus grande que la deuxième distance.

11. Support mobile selon l'une des revendications 4 à 10, **caractérisé en ce que** l'appui est monté à roulement sur le support de roulettes (4).

12. Support mobile selon l'une des revendications 1 à 11, **caractérisé en ce que** le support de roulettes (4) est doté d'un tube de guidage et que la colonne (6) est guidée dans le tube de guidage.

13. Support mobile selon les revendications 1 à 12, **caractérisé en ce que** le pied servant de base (8) est doté de doigts de guidage qui sont orientés parallèlement au mouvement vertical, dans la direction du support de roulettes (4), et que le support de roulettes (4) est doté d'orifices, dans lesquels s'engagent les doigts de guidage.

14. Support mobile selon l'une des revendications 1 à 13, **caractérisé en ce que** le point de pivotement (10) est disposé sensiblement dans ou au-dessous d'un plan principal du support de roulettes (4).

15. Support mobile selon l'une des revendications 4 à 14, **caractérisé en ce que** l'appui porte sensiblement au-dessous d'un plan principal du support de roulettes (4) contre un décalage du support de roulettes (4).
